# EUROPÄISCHE PATENTSCHRIFT

(11) **EP 1 293 696 B1**
(45) Veröffentlichungstag und Bekanntmachung des Hinweises auf die Patenterteilung: **07.07.2004**
(21) Anmeldenummer: 02016054.5
(22) Anmeldetag: 19.07.2002
(51) Int. Cl.: F16D 43/206

(54) **Drehmomentbegrenzungskupplung**
Torque limiting coupling
Embrayage limitateur de couple

(30) Priorität: 14.09.2001 DE 10145430
(43) Veröffentlichungstag der Anmeldung: 19.03.2003
(73) Patentinhaber: GKN Walterscheid GmbH, 53797 Lohmar (DE)
(72) Erfinder: Kämpf, Klaus, Dipl.-Ing., 53797 Lohmar (DE); Fartmann, Norbert, Dipl.-Ing., 53721 Siegburg (DE); Coenen, Karl, Dipl.-Ing., 53721 Siegburg (DE)
(74) Vertreter: Harwardt, Günther, Dipl.-Ing.

(56) Entgegenhaltungen:
- DE-A- 3 034 606
- DE-A- 3 344 043
- US-A- 3 405 790

## Beschreibung

Die Erfindung betrifft eine Drehmomentbegrenzungskupplung, insbesondere in einem Antriebsstrang landwirtschaftlicher Geräte. Drehmomentbegrenzungskupplungen sollen Beschädigungen oder Zerstörungen landwirtschaftlicher Geräte durch Überbelastungen verhindern. Die Drehmomentbegrenzungskupplung trennt den Antrieb von dem landwirtschaftlichen Gerät, z. B. dann, wenn das zum Antreiben des landwirtschaftlichen Geräts erforderliche Drehmoment über einen Grenzwert ansteigt und eine Beschädigung des Gerätes hervorrufen könnte. Dies kann z. B. dann geschehen, wenn das landwirtschaftliche Gerät festgefahren ist.

Die DE 30 34 606 A1 zeigt eine Drehmomentbegrenzungskupplung mit einer Kupplungsnabe und einer Kupplungshülse, die um eine Längsachse drehbar angeordnet sind. Die Kupplungsnabe weist Durchbrüche auf, in denen Mitnehmerkörper parallel zur Längsachse verstellbar gehalten sind und in einer Drehmoment übertragenden Stellung in zu den Durchbrüchen korrespondierende Ausnehmungen eingreifen. Eine Schaltscheibe ist axial mit Federmitteln beaufschlagt und stützt sich gegen die Mitnehmerkörper ab, so dass diese in den Ausnehmungen gehalten sind. Bei Überschreiten eines vorbestimmten Drehmoments werden die Mitnehmerkörper axial entgegen der Federkraft der Federmittel aus den Ausnehmungen gedrückt, rollen auf einer Seitenfläche der Kupplungshülse ab und drehen dadurch die Schaltscheibe in eine Position, in der die Mitnehmerkörper in Ausnehmungen der Schaltscheibe eingreifen. In dieser Stellung ist die Kupplungsnabe antriebsmäßig von der Kupplungshülse getrennt, so dass kein Drehmoment zwischen der Kupplungsnabe und der Kupplungshülse übertragen werden kann. Ferner weist die Schaltscheibe auf ihrem Außenumfang einen radial nach außen weisenden Schaltnocken auf. Ein Schaltstößel ist zwischen einer Freigabeposition und einer Sperrposition verstellbar angeordnet. In der Sperrposition wirkt der Schaltstößel mit dem Schaltnocken derart zusammen, dass bei Drehung der Drehmomentbegrenzungskupplung die Schaltscheibe in ihre Freilaufstellung überführt wird, so dass die Drehmomentübertragung unterbrochen ist. Mittels eines Rückstellnockens auf der Kupplungsnase wird der Schaltstößel nach Verdrehen der Schaltscheibe zurück in die Freigabeposition bewegt. Nachteilig bei dieser Ausführungsform wirkt sich aus, dass bei Abschalten der Drehmomentbegrenzungskupplung die angetriebenen Massen des landwirtschaftlichen Geräts nachlaufen. Dies kann insbesondere in einer Notsituation zu einer Gefährdung des Bedienpersonals führen. Ein Festsetzen der angetriebenen Massen des landwirtschaftlichen Geräts muss durch eine separate Einheit erfolgen.

Eine Drehmomentbegrenzungskupplung nach dem Oberbegriff des Anspruchs 1 ist aus DE-A-33 44 043 bekannt.

Aufgabe der vorliegenden Erfindung ist es, eine Drehmomentbegrenzungskupplung bereitzustellen, die zum einen die Funktion übernimmt, bei einer Überlastung eine Drehmomentübertragung zu unterbrechen, und die andererseits die Funktion übernimmt, die angetriebenen Massen festzusetzen.

Die Aufgabe wird erfindungsgemäß durch eine Drehmomentbegrenzungskupplung umfassend
- eine Längsachse, um die die Drehmomentbegrenzungskupplung drehbar angeordnet ist,
- eine Kupplungsnabe, die umfangsverteilte Durchbrüche aufweist, in welchen Mitnehmerkörper parallel zur Längsachse verstellbar gehalten sind,
- eine die Kupplungsnabe in einer Antriebsdrehrichtung antreibende Kupplungshülse, die zu den Durchbrüchen korrespondierende erste Ausnehmungen aufweist,
- eine Schaltscheibe,
   - die zwischen einer Drehmoment übertragenden Stellung und einer Freilaufstellung relativ zur Kupplungsnabe drehbar angeordnet ist,
   - die durch in Umfangsrichtung wirkenden Federmitteln zur Drehmoment übertragenden Stellung beaufschlagt ist,
   - die durch axial wirkende Federmittel die Mitnehmerkörper in Richtung zur Kupplungsnabe beaufschlagt, wobei die Mitnehmerkörper zur Drehmomentübertragung in die Ausnehmungen der Kupplungshülse eingreifen,
   - die bei Überschreiten eines vorgegebenen Nennmoments durch eine Abrollbewegung der Mitnehmerkörper aus der Drehmoment übertragenden Stellung zur Freilaufstellung überführbar ist,
   - die zu den Durchbrüchen korrespondierende zweite Ausnehmungen aufweist, in welche die Mitnehmerkörper in der Freilaufstellung eingreifen,
- eine Sperrklinke,
   - die zwischen einer Freigabestellung und einer Sperrstellung bewegbar ist,
   - die in der Sperrstellung mit einer radialen Schaltfläche auf dem Umfang der Schaltscheibe derart zusammenwirkt, dass die Schaltscheibe von der Drehmoment übertragenden Stellung in die Freilaufstellung überführbar ist und
   - die in der Sperrstellung mit einer radial verlaufenden ersten Sperrfläche der Kupplungsnabe derart zusammenwirkt, dass diese gegen Drehung um die Längsachse in der Antriebsdrehrichtung gesperrt ist,
   - die Mittel aufweist, die in der Sperrstellung der Sperrklinke derart mit der Kupplungsnabe zusammenwirken, dass diese gegen Drehung entgegen der Antriebsdrehrichtung gesperrt ist,
gelöst.

Die erfindungsgemäße Drehmomentbegrenzungskupplung erfüllt somit zwei Funktionen. Die erste Funktion ist das Trennen der Kupplungsnabe und der Kupplungshülse bei Überlast, so dass keine Drehmomente zwischen der Kupplungsnabe und der Kupplungshülse übertragen werden können. Dabei ist die Drehmomentbegrenzungskupplung derart ausgestaltet, dass bei Reduzierung der Relativdrehzahl zwischen der Kupplungsnabe und der Kupplungshülse die Schaltscheibe aufgrund der in Umfangsrichtung wirkenden Federmittel zur Drehmoment übertragenden Stellung zurückbewegt wird. Hierdurch lässt sich die Drehmomentbegrenzungskupplung lediglich durch Absenken der Drehzahl wieder einschalten, ohne dass die Drehmomentbegrenzungskupplung manuell verstellt werden muss.

Die zweite Funktion besteht darin, dass nach Überführen der Sperrklinke in die Sperrstellung die Drehmomentbegrenzungskupplung abgeschaltet wird, d. h. die Schaltscheibe in ihre Freilaufstellung überführt wird, und die angetriebene Kupplungsnabe durch die Sperrklinke gegen Drehung gesperrt ist. Die Sperrklinke ist hierzu beispielsweise an einem Gestell des landwirtschaftlichen Gerätes schwenkbar befestigt, so dass die Kräfte beim Abstoppen der Kupplungsnabe und der damit verbundenen angetriebenen Massen des landwirtschaftlichen Gerätes gegen den Rahmen des landwirtschaftlichen Gerätes abgestützt sind.

Die erfindungsgemäße Drehmomentbegrenzungskupplung ermöglicht somit eine Not-Abschaltung des Antriebs in einer Gefahrensituation. Die Sperrklinke kann z. B. mittels eines manuell betätigbaren Schalters ausgelöst werden, so dass das Bedienpersonal in einer Notsituation das landwirtschaftliche Gerät manuell festsetzen kann. Ferner ist es möglich, dass die Sperrklinke mittels einer Sensoreinheit betätigt wird, welche den Arbeitsbereich und somit den Gefahrenbereich des landwirtschaftlichen Gerätes überwacht und bei Eindringen eines Fremdkörpers oder einer Person in diesen Gefahrenbereich die Sperrklinke auslöst.

Ferner ist durch die Mittel der Sperrklinke, die mit der Kupplungsnabe zusammenwirken, gewährleistet, dass auch ein Zurückdrehen der angetriebenen Massen verhindert wird. Ein Zurückdrehen kann dadurch geschehen, dass bei einem Absenken der Drehzahl der Kupplungshülse die in Umfangsrichtung wirkenden Federmittel bewirken, dass die Kupplungsnabe zurückgedreht wird, während die Schaltscheibe gegen die Sperrklinke abgestützt bleibt. Als Folge davon würde die Drehmomentbegrenzungskupplung wieder einschalten, so dass die Kupplungsnabe wieder in Antriebsdrehrichtung angetrieben und aufgrund der dadurch resultierenden Relativdrehung der Kupplungsnabe zur Schaltscheibe die Drehmomentbegrenzungskupplung abschalten würde. In einem niedrigen Drehzahlbereich würde sich dieser Vorgang kontinuierlich wiederholen.

Hierzu kann vorgesehen sein, dass in der Freilaufstellung der Schaltscheibe die Sperrklinke mit einem zur Längsachse gerichteten Sperransatz in eine radiale, die erste Sperrfläche und eine zweite Sperrfläche bildende Sperrnut der Kupplungsnabe eingreift und eine Drehung der Kupplungsnabe in beide Drehrichtungen sperrt.

Alternativ kann auch in der Freistellung der Schaltscheibe in der Sperrklinke einerseits mit einem radial in Richtung zur Drehmomentbegrenzungskupplung gerichteten Sperransatz gegen die erste Sperrfläche der Kupplungsnabe abgestützt sein und andererseits mit einem Federelement gegen eine radiale zweite Sperrfläche abgestützt sein.

Bevorzugte Ausführungsbeispiele werden anhand der Zeichnungen näher erläutert. Hierin zeigt
- Figur 1: eine perspektivische Darstellung einer erfindungsgemäßen Drehmomentbegrenzungskupplung in einem Antrieb für ein landwirtschaftliches Gerät;
- Figur 2: einen Teillängsschnitt der Drehmomentbegrenzungskupplung;
- Figur 3A: eine schematische Ansicht der Drehmomentbegrenzungskupplung in Richtung der Längsachse, wobei die Schaltscheibe in der Drehmoment übertragenden Stellung und die Sperrklinke in Anlage zur Schaltfläche dargestellt ist;
- Figur 3B: die Drehmomentbegrenzungskupplung gemäß Figur 3A, wobei die Schaltscheibe in ihrer Freilaufstellung und die Sperrklinke in Anlage zu einer ersten Sperrfläche der Kupplungsnabe dargestellt sind;
- Figur 3C: die Drehmomentbegrenzungskupplung gemäß Figur 3A, wobei ein Sperransatz der Sperrklinke in eine Nut der Kupplungsnabe eingreift;
- Figur 4A: eine Drehmomentbegrenzungskupplung gemäß Figur 3A, wobei die Sperrklinke ein Federelement aufweist, und
- Figur 4B: eine Drehmomentbegrenzungskupplung gemäß Figur 3B, wobei das Federelement gegen eine zweite Sperrfläche der Kupplungsnabe abgestützt ist.

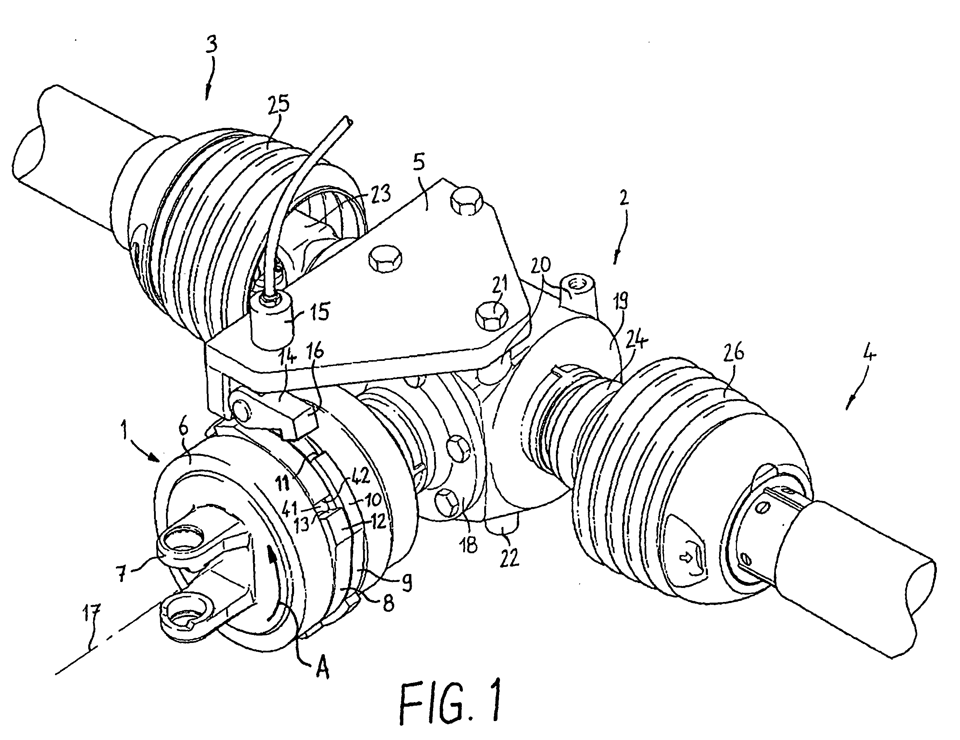

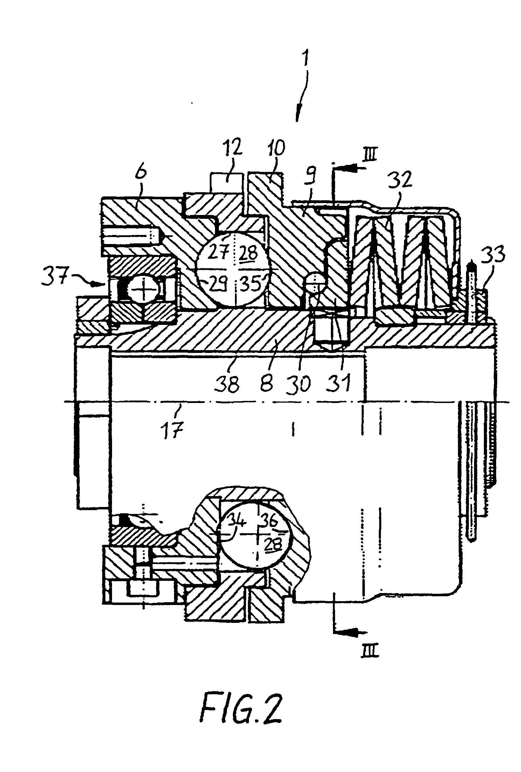

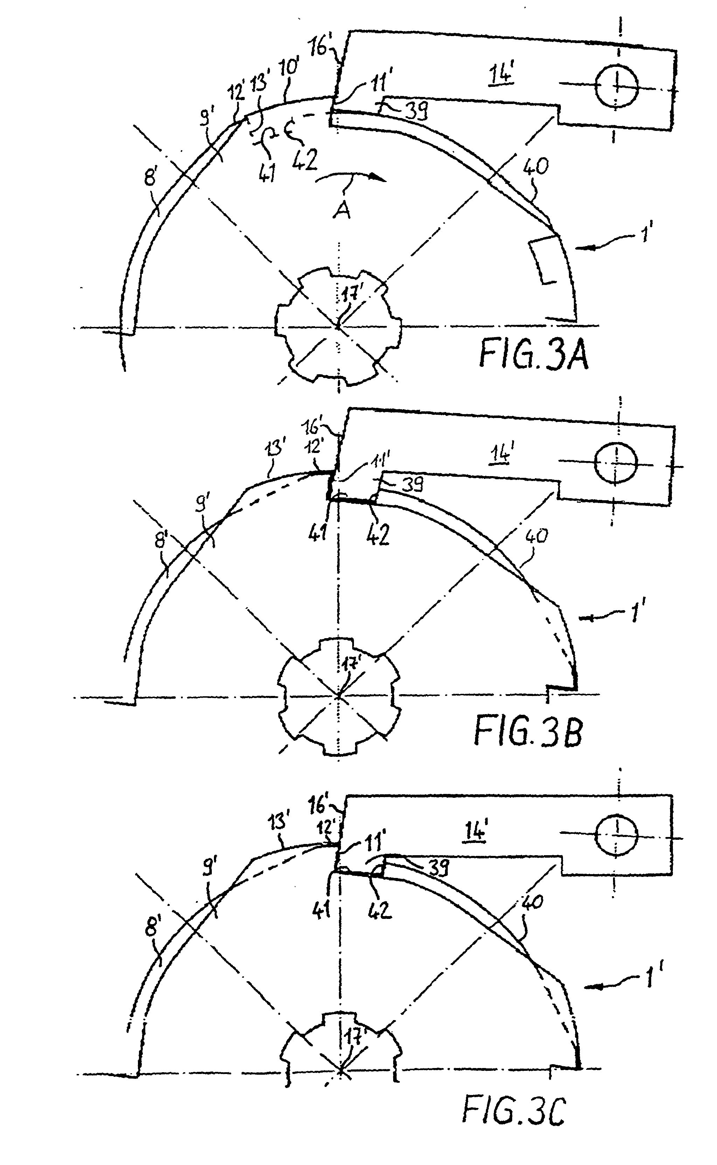

Figur 1 zeigt, in einer perspektivischen Darstellung, eine Drehmomentbegrenzungskupplung 1, die zu denen der Figuren 2 und 3A-C identisch ist. Die Drehmomentbegrenzungskupplung 1 ist antriebsmäßig mit einem Verteilergetriebe 2 verbunden. Das Verteilergetriebe 2 ist wiederum antriebsmäßig mit einer ersten Gelenkwelle 3 und einer zweiten Gelenkwelle 4 zum Antreiben eines landwirtschaftlichen Gerätes verbunden. Am Verteilergetriebe 2 ist ein Träger 5 befestigt, wobei das Verteilergetriebe z. B. an einem Rahmen eines landwirtschaftlichen Geräts befestigt sein kann.

Die Drehmomentbegrenzungskupplung 1 weist eine Kupplungshülse 6 auf, die drehfest mit einer Gelenkgabel 7 verbunden ist. Die Gelenkgabel 7 ist zum Antreiben der Drehmomentbegrenzungskupplung 1 in einer Antriebsdrehrichtung A mit einer Gelenkwelle verbindbar. Die Kupplungshülse 6 ist antriebsmäßig mit einer Kupplungsnabe 8 verbunden, wobei die antriebsmäßige Verbindung zwischen der Kupplungshülse 6 und der Kupplungsnabe 8 bei Überschreiten eines Grenzdrehmoments unterbrochen werden kann. Die Funktionsweise der Drehmomentbegrenzungskupplung 1 im einzelnen wird bei den Figuren 2 und 3A-C näher erläutert. Beim Unterbrechen der antriebsmäßigen Verbindung zwischen der Kupplungshülse 6 und der Kupplungsnabe 8 wird eine Schaltscheibe 9 relativ zur Kupplungsnabe 8 verdreht. Die Schaltscheibe 9 lässt sich zum Abschalten der Drehmomentbegrenzungskupplung 1 auch gesteuert verdrehen. Hierzu weist die Schaltscheibe 9 einen Schaltnocken 10 auf, der eine radial verlaufende Schaltfläche 11 bildet. Die Kupplungsnabe 8 weist darüber hinaus einen Sperrnocken 12 auf, der eine radial erste verlaufende Sperrfläche 13 bildet.

An dem Träger 5 ist eine Sperrklinke 14 zwischen einer Freigabestellung und einer Sperrstellung schwenkbar montiert. In Figur 1 ist die Sperrklinke 14 in der Freigabestellung dargestellt. Die Sperrklinke 14 ist mittels eines Betätigungselements 15, welches eine mechanische elektromagnetische, hydraulische oder pneumatische Wirkungsweise aufweisen kann, verstellbar. In der Sperrstellung der Sperrklinke 14 wird eine Anschlagfläche 16 der Sperrklinke 14 in den Drehbereich des Schaltnockens 10 und des Sperrnockens 14 überführt. Die Schaltfläche 14 und die Sperrfläche 13 sind derart zueinander angeordnet, dass nach Überführen der Sperrklinke 14 in ihre Sperrstellung die Anschlagfläche 16 zunächst in Anlage zur Schaltfläche 14 gelangt. Die Schaltscheibe 9 wird daraufhin durch die Drehung der Drehmomentbegrenzungskupplung 1 in Drehrichtung A in eine Freilaufstellung überführt, in der die Drehmomentübertragung zwischen der Kupplungshülse 6 und der Kupplungsnabe 8 unterbrochen ist. In dieser Stellung sind die Schaltfläche 11 und die Sperrfläche 13 in Richtung einer Längsachse 17 der Drehmomentbegrenzungskupplung 1 betrachtet deckungsgleich, so dass die Anschlagfläche 16 in Anlage zur Sperrfläche 13 ist. Somit ist die Kupplungsnabe 8 gegen Drehung in Antriebsdrehrichtung A gesperrt.

Da die Kupplungsnabe 8 antriebsmäßig mit dem Verteilergetriebe 2 und damit mit der ersten Gelenkwelle 3 und der zweiten Gelenkwelle 4 verbunden ist, sind nach Sperrung der Kupplungsnabe 8 auch die nachgeordneten angetriebenen Massen abgebremst. Die Drehmomentbegrenzungskupplung 1 ist über eine Flanschverbindung 18 mit einem Gehäuse 19 des Verteilergetriebes 2 verbunden. Das Gehäuse 19 weist Bohrungen 20 mit Innengewinde auf, in die Befestigungsschrauben 21 zum Befestigen des Trägers 5 eingeschraubt sind. Ferner weist das Gehäuse 19 Befestigungsmittel 22 zum Befestigen des Gehäuses 19 z. B. an einem Rahmen auf. Die Befestigungsmittel 22 können ebenfalls durch Bohrungen mit Innengewinden gebildet sein. Aus dem Gehäuse 19 sind eine erste Gelenkgabel 23 und eine zweite Gelenkgabel 24 geführt, die mit Gelenkgabeln der ersten Gelenkwelle 3 und der vierten Gelenkwelle 4 verbunden sind. Drehfest befestigte Schutzvorrichtungen 25, 26 verhindern, dass Personen durch die drehenden Gelenkwellen 3, 4 verletzt werden können.

In Figur 2 ist die Drehmomentbegrenzungskupplung 1 in einem Teillängsschnitt dargestellt. Die Drehmomentbägrenzungskupplung ist um die Längsachse 17 drehbar angeordnet und umfasst die Kupplungsnabe 8 und die Kupplungshülse 6. Die Kupplungsnabe 8 weist umfangsverteilt Durchbrüche 27 auf, in denen als Wälzkörper wirkende Mitnehmerkörper 28 parallel zur Längsachse 17 verstellbar gehalten sind. Die Kupplungshülse 6 weist zu den Durchbrüchen 27 korrespondierende erste Ausnehmungen 29 auf. Um Drehmoment zu übertragen, greifen die Mitnehmerkörper 28 in die ersten Ausnehmungen 29 ein, wie in Figur 2 oberhalb der Längsachse 17 dargestellt. Hierbei befindet sich die Schaltscheibe 9 in einer Drehmoment übertragenden Stellung und ist axial gegen die Mitnehmerkörper 28 abgestützt. An der den Mitnehmerkörpern 28 abgewandten Seite ist die Schaltscheibe 9 über ein Drucklager 30 und über einen Druckring 31 gegen ein Tellerfederpaket 32 abgestützt. Durch das Tellerfederpaket 32 ist der Schaltring 9 axial gegen die Mitnehmerkörper 28 mit Kraft beaufschlagt, so dass die Mitnehmerkörper 8 in den Ausnehmungen 29 gehalten sind. Das Tellerfederpaket 32 stützt sich axial gegen einen Stützring 33, der axial fest mit der Nabe 8 verbunden ist, ab.

Bei Überschreitung eines Grenzdrehmoments werden die Mitnehmerkörper 28 aus den ersten Ausnehmungen 29 gegen die Federkraft des Tellerfederpakets 32 herausgedrückt, wobei dieses durch eine axiale Bewegung der Schaltscheibe 9 in Richtung auf das Tellerfederpaket 32 zu zusammengedrückt wird. Die Mitnehmerkörper 28 rollen hierbei in einer ersten Laufrille 34 der Kupplungsnabe 6 sowie in einer zweiten Laufrille 35 der Schaltscheibe 9 ab, wobei aufgrund der Abrollbewegung der Mitnehmerkörper 28 die Schaltscheibe 9 relativ zur Nabe 8 um die Längsachse 17 gedreht wird. Die Schaltscheibe 9 weist zu den Durchbrüchen 27 korrespondierende zweite Ausnehmungen 36 auf, in die die Mitnehmerkörper 28 in einer Freilaufstellung der Schaltscheibe 9 eingreifen, so dass die Schaltscheibe 9 aufgrund der Federkraft des Tellerfederpakets 32 axial in Richtung zur Kupplungshülse 6 bewegt wird. Die Freilaufstellung der Schaltscheibe 9 ist in Figur 2 unterhalb der Längsachse 17 dargestellt.

Da die Mitnehmerkörper 28 nicht in die ersten Ausnehmungen 29 der Kupplungshülse 6 eingreifen, dreht sich die angetriebene Kupplungshülse 6 relativ zur Kupplungsnabe 8. Hierzu ist ein Wälzlager 37 vorgesehen. Erst bei Reduzierung der Relativdrehzahl zwischen der Kupplungshülse 6 und der Kupplungsnabe 8 lässt sich die Schaltscheibe 9 mittels in Umfangsrichtung wirkender Federmittel (hier nicht dargestellt) zurück in die Drehmoment übertragende Stellung überführen, in der die Mitnehmerkörper 28 in die ersten Ausnehmungen 29 der Kupplungshülse 6 eingreifen.

Mittels der Sperrklinke gemäß Figur 1 kann über den Schaltnocken 10, der am Umfang der Schaltscheibe 9 vorgesehen ist, die Schaltscheibe 9 aus der Drehmoment übertragenden Stellung in die Freilaufstellung überführt werden. In der Freilaufstellung der Schaltscheibe 9 stößt die Sperrklinke 16 zudem gegen den Sperrnocken 12, der am Außenumfang der Kupplungsnabe 8 angeordnet ist. Somit wird die Kupplungsnabe 8 gegen das Weiterdrehen um die Längsachse 17 gesperrt. Die Kupplungsnabe 8 weist eine Bohrung 38 mit Keilzahnprofil auf, über die die Kupplungsnabe 8 mit dem Verteilergetriebe gemäß Figur 1 verbunden ist. Durch das Festsetzen der Kupplungsnabe 8 sind somit auch die angetriebenen Massen abgebremst.

Die Figuren 3A bis 3C zeigen die Drehmomentbegrenzungskupplung 1 gemäß der Figuren 1 und 2 schematisch in der Ansicht III-III in Figur 2. Übereinstimmende Bauteile sind mit gleichen Bezugszeichen versehen und bei den Figuren 1 und 2 beschrieben.

Die Figuren 3A bis 3C zeigen eine erste alternative Ausführungsform zum Festsetzen der Kupplungsnabe. Die Sperrklinke 14' ist in Richtung zu ihrer Sperrstellung mit Kraft beaufschlagt. Wie in Figur 3A dargestellt befindet sich ein radial zur Drehmomentbegrenzungskupplung 1' gerichteter Sperransatz 39 der Sperrklinke 14' in Anlage zu einer Außenumfangsfläche 40 der Kupplungsnabe 8'. Die Anschlagfläche 16' ist in Anlage zur Schaltfläche 11' des Schaltnockens 10'. Bei einer Drehbewegung der Drehmomentbegrenzungskupplung 1' in Drehrichtung A wird somit die Schaltscheibe 9' relativ zur Kupplungsnabe 8' verdreht bis die Kupplungsnabe 8' die in Figur 3B dargestellte Position erreicht hat. In dieser Position stößt die Sperrklinke 14' mit ihrer Anschlagfläche 16' auch gegen die Sperrfläche 13' des Sperrnockens 12'. Die Kupplungsnabe 8' ist somit gegen ein Weiterdrehen in Antriebsdrehrichtung A gesperrt. Zudem weist die Kupplungsnabe 8' eine radiale Sperrnut 41 auf, die eine zweite Sperrfläche 42 bildet. In die Sperrnut 41 kann die Sperrklinke 14' mit dem Sperransatz 39 radial eintauchen, so dass die Kupplungsnabe 8' zum einen mit der ersten Sperrfläche 13' sowie mit der zweiten Sperrfläche 42 gegen den Sperransatz 39 der Sperrklinke 14' abgestützt ist.

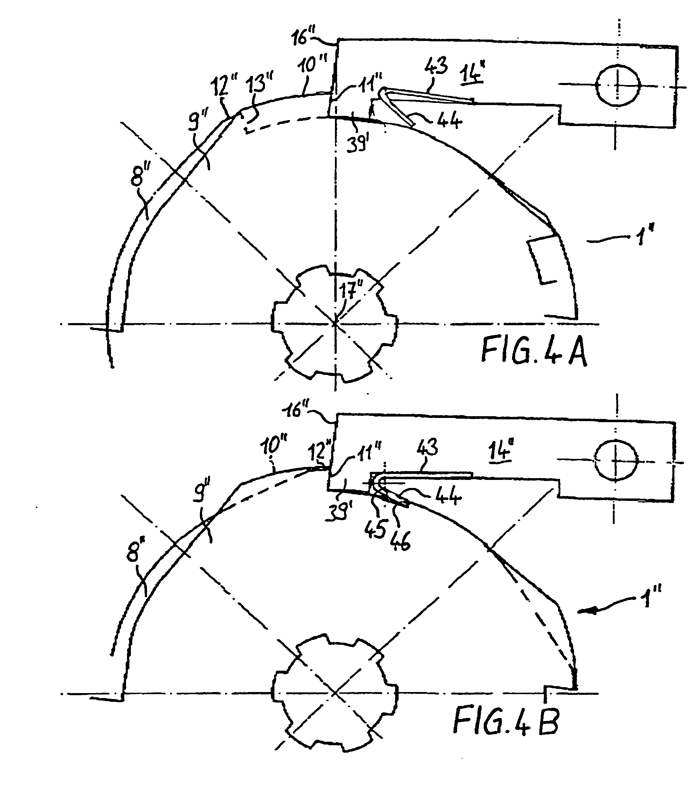

Die Figuren 4A bis 4B zeigen eine zweite Alternative zum Sperren der Drehmomentbegrenzungskupplung 1''. In Figur 4A ist die Sperrklinke 14" zur Sperrstellung hin mit Kraft beaufschlagt, wobei die Schaltfläche 11'' des Schaltnockens 10" gegen die Anschlagfläche 16'' der Sperrklinke 14'' abgestützt ist. Im weiteren Verlauf der Drehung der Drehmomentbegrenzungskupplung 1'' in Richtung der Antriebsdrehrichtung A wird die Schaltscheibe 9" in die in Figur 4B dargestellte Position relativ zur Kupplungsnabe 8" gedreht. In dieser Stellung stößt die Anschlagfläche 16" ferner gegen die erste Sperrfläche 13'' der Kupplungsnabe 8" an und sperrt die Kupplungsnabe 8'' gegen weiteres Verdrehen in Richtung der Antriebsdrehrichtung A.

An der Sperrklinke 14" ist ein Federelement 43 federnd befestigt. Das Federelement 43 ist federnd in Richtung zur Drehmomentbegrenzungskupplung 1'' und damit zur Außenumfangsfläche der Kupplungsnabe 8'' hin beaufschlagt. In der in Figur 4B dargestellten Position greift ein Schenkel 44 des Federelements 43 in eine Vertiefung 45, welche eine zweite Sperrfläche 46 bildet, ein, so dass die Kupplungsnabe 8" gegen Verdrehen in beiden Drehrichtungen gesperrt ist.

### Bezugszeichenliste

- 1: Drehmomentbegrenzungskupplung
- 2: Verteilergetriebe
- 3: erste Gelenkwelle
- 4: zweite Gelenkwelle
- 5: Befestigungselement
- 6, 6', 6'': Kupplungshülse
- 7: Gelenkgabel
- 8, 8', 8'': Kupplungsnabe
- 9, 9', 9'': Schaltscheibe
- 10, 10', 10": Schaltnocken
- 11, 11', 11": Schaltfläche
- 12, 12': Sperrnocken
- 13, 13', 13'': erste Sperrfläche
- 14, 14': Sperrklinke
- 15: Betätigungselement
- 16, 16', 16'': Anschlagfläche
- 17, 17', 17'': Längsachse
- 18: Flanschverbindung
- 19: Gehäuse
- 20: Bohrung
- 21: Befestigungsschrauben
- 22: Befestigungsmittel
- 23: erste Gelenkgabel
- 24: zweite Gelenkgabel
- 25: Schutzvorrichtung
- 26: Schutzvorrichtung
- 27: Durchbruch
- 28: Mitnehmerkörper
- 29: erste Ausnehmung
- 30: Drucklager
- 31: Druckring
- 32: Tellerfederpaket
- 33: Stützring
- 34: erste Laufrille
- 35: zweite Laufrille
- 36: zweite Ausnehmung
- 37: Wälzlager
- 38: Bohrung
- 39: Sperransatz
- 40: Außenumfangsfläche
- 41: Sperrnut
- 42: zweite Sperrflächen
- 43: Federelement
- 44: Schenkel
- 45: Vertiefung
- 46: zweite Sperrfläche

- A: Antriebsdrehrichtung

## Patentansprüche

1. Drehmomentbegrenzungskupplung insbesondere in einem Antriebsstrang zum Antreiben landwirtschaftlicher Geräte , umfassend
- eine Längsachse (17, 17', 17''), um die die Drehmomentbegrenzungskupplung (1) drehbar angeordnet ist,
- eine Kupplungsnabe (8, 8', 8"), die umfangsverteilte Durchbrüche (27) aufweist, in welchen Mitnehmerkörper (28) parallel zur Längsachse (17) verstellbar gehalten sind,
- eine die Kupplungsnabe (8, 8', 8'') in einer Antriebsdrehrichtung antreibende Kupplungshülse (6, 6', 6''), die zu den Durchbrüchen (27) korrespondierende erste Ausnehmungen (29) aufweist,
- eine Schaltscheibe (9, 9', 9''),
- die zwischen einer Drehmoment übertragenden Stellung und einer Freilaufstellung relativ zur Kupplungsnabe (8, 8', 8'') drehbar angeordnet ist,
- die durch in Umfangsrichtung wirkende Federmittel zur Drehmoment übertragenden Stellung beaufschlagt ist,
- die durch axial wirkende Federmittel (32) die Mitnehmerkörper (28) in Richtung zur Kupplungsnabe (8, 8', 8'') beaufschlagt, wobei die Mitnehmerkörper (28) zur Drehmomentübertragung in die Ausnehmungen der Kupplungshülse (6, 6', 6'') eingreifen,
- die bei Überschreiten eines vorgegebenen Nennmoments durch eine Abrollbewegung der Mitnehmerkörper (28) aus der Drehmoment übertragenden Stellung zur Freilaufstellung überführbar ist,
- die zu den Durchbrüchen (27) korrespondierende zweite Ausnehmungen (36) aufweist, in welche die Mitnehmerkörper (28) in der Freilaufstellung eingreifen,
- eine Sperrklinke (14, 14', 14''),
- die zwischen einer Freigabestellung und einer Sperrstellung bewegbar ist,
- die in der Sperrstellung mit einer radialen Schaltfläche (11, 11', 11'') auf dem Umfang der Schaltscheibe (9, 9', 9") derart zusammenwirkt, daß die Schaltscheibe (9, 9', 9'') von der Drehmoment übertragenden Stellung in die Freilaufstellung überführbar ist und
- die in der Sperrstellung mit einer radial verlaufenden ersten Sperrfläche (13, 13', 13") der Kupplungsnabe (8, 8', 8'') derart zusammenwirkt, dass diese gegen Drehung um die Längsachse (17, 17', 17'') in der Antriebsdrehrichtung (A) gesperrt ist,
**dadurch gekennzeichnet, daß** die Sperrklinke (14,14',14") Mittel (39) aufweist, die in der Sperrstellung der Sperrklinke (14', 14'') derart mit der Kupplungsnabe (8, 8') zusammenwirken, dass diese gegen Drehung entgegen der Antriebsdrehrichtung (A) gesperrt ist.

2. Drehmomentbegrenzungskupplung nach Anspruch 1,
**dadurch gekennzeichnet,**
**dass** in der Freilaufstellung der Schaltscheibe (9') die Sperrklinke (14') mit einem zur Längsachse (17') gerichteten Sperransatz (39) in eine radiale, die erste Sperrfläche (13') und eine zweite Sperrfläche (42) bildende Sperrnut (41) der Kupplungsnabe (8) eingreift und eine Drehung der Kupplungsnabe (8') in beide Drehrichtungen sperrt.

3. Drehmomentbegrenzungskupplung nach Anspruch 1,
**dadurch gekennzeichnet,**
**dass** in der Freilaufstellung der Schaltscheibe (9'') die Sperrklinke (14'') einerseits mit einem radial in Richtung zur Drehmomentbegrenzungskupplung (1) gerichteten Sperransatz (39') gegen die erste Sperrfläche (13") der Kupplungsnabe (8") abgestützt ist und andererseits mit einem Federelement (43) gegen eine radiale zweite Sperrfläche (46) abgestützt ist.

## Claims

1. Torque limiting coupling, especially in a drive line for driving agricultural implements, comprising
- a longitudinal axis (17, 17', 17"), around which the torque limiting coupling (1) is rotatably arranged,
- a coupling hub (8, 8', 8"), having through holes (27), distributed around the circumference, in which transfer elements (28) are held adjustably parallel to the longitudinal axis (17),
- a coupling sleeve (6, 6', 6"), driving the coupling hub (8, 8', 8") in a rotational driving direction, having first recesses (29), corresponding to the through holes (27),
- a switching disc (9, 9', 9"),
- which is arranged rotatably between a torque transmitting position and a freewheeling position relative to the coupling hub (8, 8', 8"),
- which is urged by spring means, acting in the circumferential direction, to the torque transmitting position,
- which urges by means of axially acting spring means (32) the transfer elements (28) in the direction towards the coupling hub (8, 8', 8"), wherein the transfer elements (28) engage in the recesses of the coupling sleeve (6, 6', 6") for torque transmission,
- which, when exceeding a predetermined nominal torque, by a rolling movement of the transfer elements (28), can be transferred from the torque transmitting position to the freewheeling position,
- which has second recesses (36), corresponding to the through holes (27), in which the transfer elements (28) engage in the freewheeling position,
- a locking pawl (14, 14', 14"),
- which is movable between a releasing position and a retaining position,
- which interacts in the retaining position with a radial switching face (11, 11', 11 ") on the circumference of the switching disc (9, 9', 9") in such a way, that the switching disc (9, 9', 9") can be transferred from the torque transmitting position to the freewheeling position and
- which interacts in the retaining position with a radially extending first retaining face (13, 13', 13") of the coupling hub (8, 8', 8") in such a way, that the coupling hub (8, 8', 8") is retained against rotation around the longitudinal axis (17, 17', 17") in the rotational driving direction (A),
**characterised in that**
the locking pawl (14, 14', 14") has means (39), which interact in the retaining position of the locking pawl (14', 14") with the coupling hub (8, 8', 8") in such a way, that the coupling hub (8, 8', 8") is retained against rotation opposite to the rotational driving direction (A).

2. Torque limiting coupling according to claim 1,
**characterised in that**
in the freewheeling position of the switching disc (9') the locking pawl (14') engages with a catch lug (39) directed towards the longitudinal axis (17') in a radial retaining groove (41) of the coupling hub (8) forming the first retaining face (13') and a second retaining face (42) and prevents a rotation of the coupling hub (8') in both rotational directions.

3. Torque limiting coupling according to claim 1,
**characterised in that**
in the freewheeling position of the switching disc (9") the locking pawl (14") is on the one hand supported with a catch lug (39'), directed radially in direction to the torque limiting coupling (1), on the first retaining face (13") of the coupling hub (8") and on the other hand is supported with a spring element (43) on a radial second retaining face (46).

## Revendications

1. Embrayage de limitation de couple, notamment dans une chaîne motrice pour l'entraînement d'engins agricoles, comprenant
- un axe longitudinal (17, 17', 17"), autour duquel l'embrayage (1) de limitation de couple est monté de manière à pouvoir tourner,
- un moyeu d'embrayage (8, 8', 8"), qui comporte des passages traversants (27) répartis sur la périphérie et dans lesquels des corps d'entraînement (28) sont retenus d'une manière réglable parallèlement à l'axe longitudinal (17),
- un manchon d'embrayage (6, 6', 6"), qui entraîne le moyeu d'embrayage (8, 8', 8") dans un sens de rotation d'entraînement et qui possède des premiers évidements (29) correspondant aux passages traversants (27),
- un disque de commutation (9, 9', 9"),
- qui est disposé entre une position de transmission du couple et une position de roue libre de manière à pouvoir tourner par rapport au moyeu d'embrayage (8, 8', 8"),
- qui est chargé par des moyens formant ressort agissant dans la direction circonférentielle, vers la position de transmission de couple,
- qui charge, à l'aide de moyens formant ressort (32) agissant axialement, les corps d'entraînement (28) en direction du moyeu d'embrayage (8, 8', 8"), les corps d'entraînement (28) s'engageant, pour la transmission du couple, dans les évidements de la douille du disque d'embrayage (6, 6', 6")
- qui, lors du dépassement d'un couple nominal prédéterminé, sous l'effet d'un mouvement de roulement des corps d'entraînement (18), peut être transféré de la position de transmission du couple à la position de roue libre,
- qui comporte des seconds évidements (36), qui correspondent aux passages traversants (27) et dans lesquels les corps d'entraînement (28) s'engagent dans la position de roue libre,
- un cliquet de blocage (14, 14', 14"),
- qui est déplaçable entre une position de libération et une position de blocage,
- qui, dans la position de blocage, coopère avec une surface radiale de commutation (11, 11', 11") sur la périphérie du disque de commutation (9, 9', 9") de telle sorte que le disque de commutation (9, 9', 9") peut être transféré de la position transmettant le couple dans la position de roue libre, et
- qui, dans la position de blocage, coopère avec une première surface de blocage (13, 13', 13"), qui s'étend radialement, du moyeu d'embrayage (8, 8', 8") de telle sorte que ce dernier est bloqué contre une rotation autour de l'axe longitudinal (17, 17', 17") dans le sens de rotation d'entraînement (A),
**caractérisé en ce que** le cliquet de blocage (14, 14', 14") comporte des moyens (39) qui, lorsque le cliquet de blocage (14, 14', 14") est dans la position de blocage, coopèrent avec le moyeu d'embrayage (8, 8', 8") de telle sorte que ce dernier est bloqué contre une rotation dans le sens opposé du sens de rotation d'entraînement (A).

2. Embrayage de limitation du couple selon la revendication 1,
**caractérisé en ce**
**que** lorsque le disque de commutation (9') est dans la position de roue libre, le cliquet de blocage (14') engrène, au moyen d'un appendice de blocage (39) dirigé vers l'axe longitudinal (17') dans une rainure radiale de blocage (41) du moyeu d'embrayage (8), qui forme la première surface de blocage (13') et une seconde surface de blocage (42), et empêche une rotation du moyeu d'embrayage (8') dans les deux sens de rotation.

3. Embrayage de limitation de couple selon la revendication 1,
**caractérisé en ce**
**que** lorsque le disque de commutation (9") est dans la position de roue libre, le cliquet de blocage (14") d'une part est supporté par un appendice saillant de blocage (39') dirigé radialement en direction de l'embrayage (1) de limitation de couple, contre la première surface de blocage (13") du moyeu d'embrayage (8") et d'autre part est supporté par un élément de ressort (43) contre une seconde surface radiale de blocage (46).
